# EUROPEAN PATENT APPLICATION

(11) **EP 1 119 138 A2**
(43) Date of publication of application: **25.07.2001**
(21) Application number: 00301016.2
(22) Date of filing: 09.02.2000
(51) Int. Cl.: H04L 12/28, H04Q 3/00

(54) **System and method for combining Internet connections with point-to-point telephonic connections**

(30) Priority: 02.12.1999 US 249027
(71) Applicant: LUCENT TECHNOLOGIES INC., Murray Hill, New Jersey 07974-0636 (US)
(72) Inventor: Miller, Steven M., Batavia, Illinois 60510 (US); Posthuma, Carl R., Wheaton, Illinois 60187 (US)
(74) Representative: Watts, Christopher Malcolm Kelway, Dr.

(57) **Abstract**

A system and method for transmitting communication signals between a telecommunication switch and to a network site on a network server via a communication network. The method comprises the steps of connecting the telecommunication switch to the network site via the communication network and establishing a point to point path between the telecommunication switch and the network site.

## Description

### Background Of The Invention

This invention generally relates to telecommunication systems and methods, and more particularly, to systems and methods that communicate via a computer network such as the Internet.

As the number of users on large computer networks such as the Internet continues to grow, electronic commerce is becoming increasingly important to the business world. At present, numerous businesses advertise, perform electronic transactions and offer electronic payment methods on the Internet. This number is increasing rapidly because the Internet allows these businesses to operate internationally and have direct access to a extensive group of consumers. However, electronic transactions and electronic payment methods require that secure information such as account numbers, personal identification codes, and credit card information be sent over the Internet where the information can be intercepted by unwanted entities.

Computer networks such as the Internet are unsecure networks because they consist of a multitude of computers which are not controlled in any unified way. The networking technology employed by the Internet is very smart. Every time, a new computer is connected to the Internet, the Internet adopts that connection as its own and begins to route Internet traffic over that connection and through that new computer Additionally, the Internet traffic follows multiple paths through multiple computers to assure proper reception at a destination site. As more computers are connected to the Internet, the network grows exponentially.

Unfortunately, every computer connected to the Internet can potentially intercept and read the Internet traffic that is routed through that computer. Thus, any secure information that is sent over the Internet may be potentially intercepted by a large number of computers connected to the Internet. Encryption has been used to help overcome this problem, however, encryption only makes it harder to access information and it does not prevent illegal access. Additionally there is no universal encryption standard and there are numerous legal and political hurdles which prevent encryption from being widely accepted as a secure way of doing business over a worldwide Internet.

At present, many consumers are unwilling to transmit sensitive information over the Internet because of the fear that their credit card data is moving across a hop by hop shared public network enabling others the opportunity to capture the data from within the network or backend servers holding the vital data. Additionally, the available encryption programs are difficult to operate and the laws governing these programs make them unattractive. Thus, in order to allow electronic commerce to grow, there is a need to implement a secure connection which will allow consumers to transmit and receive sensitive information with Internet enabled businesses.

Additionally, there is a need to allow consumers to communicate with Internet enabled businesses in a two way voice method while still connect to the Internet. At present, Internet telephones are available which allow telephonic communication via the Internet. However, these Internet telephones have poor sound quality because their performance is limited by the performance of the Internet connection. Thus, there is an additional need to allow consumers to communicate with businesses in a two way voice method that will maintain connection to the Internet.

### Summary Of The Invention

The above problems are solved, and a number of technical advances are achieved in the art, by implementation of a system and method that allows a worldwide Internet connection to be combined with one or more point to point telephonic connections

In accordance with the invention, a method for transmitting communication signals from a elecommunication switch, via a communication network, to a network server having a network site for communication with a computer device coupled with the telecommunication system is described. The method comprises the steps of connecting the telecommunication switch to the network site via the communication network and establishing a point to point path between the telecommunication switch and the network site.

### Brief Description Of The Drawings

The foregoing advantageous features of the invention will be described in detail and other advantage features will be made apparent upon reading the following detailed description that is given with reference to the several figures of the drawings, in which:
Fig. 1 shows a functional block diagram for the communication system of the invention;
Fig. 2 shows a more detailed block diagram for the communication system shown in Fig. 2; and
Fig. 3 shows a signal flow diagram showing the process performed by the system of Fig. 1.

### Detailed Description

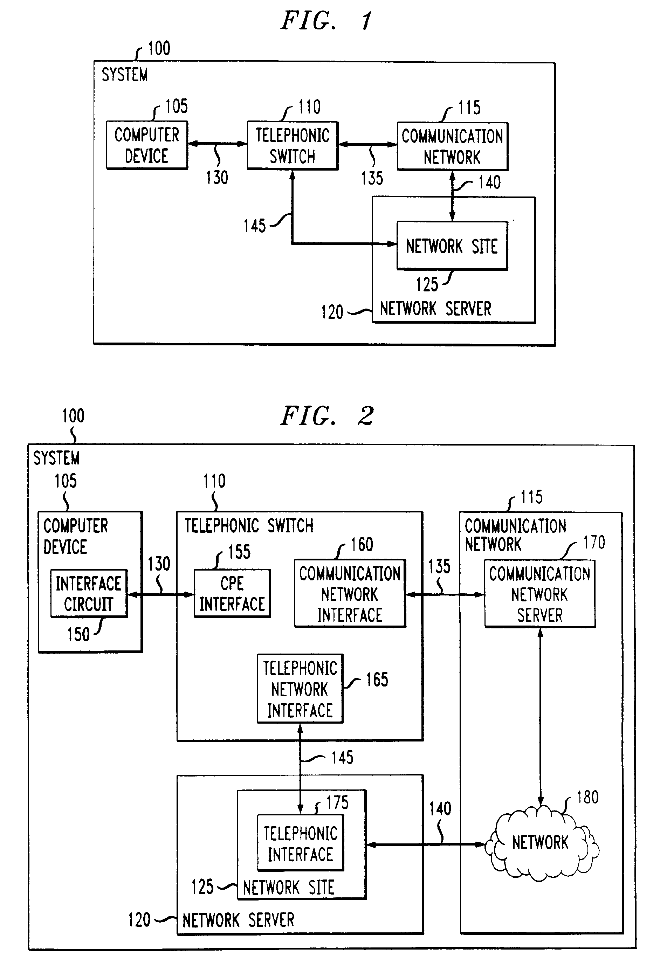

Fig. 1 shows a functional block diagram for the communication system 100. The communication system 100 is shown having a computer device 105, telephonic switch 110, communication network 115, network server 120, and a network site 125. The computer device 105 is connected, via connection (communication link) 130, to the telephonic switch 110. The telephonic switch 110 is connected to the communication network 115 via connection 135 The communication network 115 is also connected via connection 140, to the network site 125. The network site 125 is located on the network server 120 and is also connected to the telephonic switch 110 via connection 145.

The telephonic switch 110 is preferably any switch that connects a central office of a telephone or cellular service provider to a computer device 105. Examples of a telephonic switch which may selectively be employed are the SESS Digital Switch and SESS Digital Cellular Switch that are both manufactured by Lucent Technologies, Inc. The communication network 115 is preferably any computer network such as a local area network, non-local area network, intranet network or the worldwide Internet. Transmission of communication signals between the switch 110 and the network site 125 at server 120 is often performed via a shared publically accessible communication network 115 such as the Internet.

The computer device 105 is any device that allows communication with the communication network. The computer device 105 may be preferably a computer, web television set, or any other device that allows bi-directional communication to the communication network 115 such as the Internet. The network server 120 is preferably a computer controlled unit connected to the communication network 115, via connection 140, such as a web server on the Internet. The network site 125 is any computer site that contains information which can be accessed via the communication network 115. Examples are web sites (also known as web pages) and file transfer protocol (FTP) sites on the Internet.

The communication link 130 is any communication link that allows the computer device 105 to communicate with the telephonic switch 110. The communication link 130 preferably includes conventional modem connections, transmission digital subscriber line (XDSL including ADSL, HDSL, VDSL, etc.) connections, cable modem connections, wireless modem connections, microwave and millimeter wave connections and optical connections.

In accordance with the present invention, the telephonic switch 110, upon being signaled from the computer device 105, makes a signal connection with the network site (web site) 125 via the communication network 115. In response to receipt of a request from the computer device 105 to make a direct connection to the network site 125, the system bypasses the intermediate communication network 115, and a point to point path across signaling connection 145 is established between the telephonic switch and the network site 125 at the network server 120. The point to point connection path is preferably established in response to a user indicating a desire to make the connection such as by actuating an icon at the computer device 105 prompting such action to the made. The point to point path across signaling connection 145 is established through one or more private switched based connections between the telephonic switch 110 and the network site 125. The connection between the switch 110 and the network site 125 across transmission media 135, 140 via the shared publically accessible communication network 115 is maintained upon the establishment of the private switched based connection between the switch 110 and the network site 125. It should be further understood that the establishment of the point to point path across private media 145 may include one or more private switch based connections between the telephonic switch 110 and the network site 125. The private switch based connections preferably avoid appearing on shared publically accessible communication networks such as network 115.

The point to point path between the switch 110 and the server 120, as seen in Fig. 1, is preferably a standard telephonic communication path such as a private circuit switched dialed calling path. Preferably the private circuit is on a public or private network. An example of this is upon the telephonic switch 110 being signaled via the communication network 115 or the computer device 105 to place a dialed modem call to the network server 120 to transmit data between computer device 105, the telephonic switch, and the network server 120.

Referring now to Fig. 2 the communication system 100 is shown in greater detail. Within the computer device 105 is a computer device interface circuit 150. The computer device interface circuit 150 communicates with the telephonic switch 110 and is preferably a modem.

The telephonic switch 110 has a customer premises equipment (CPE) interface 155, a communication network interface 160 and a telephonic network interface 165. The CPE interface 155 connects and communicates with the computer interface circuit 150 via communication link 130. The communication network interface 160 connects and communicates, via connection 135, with a communication network server 170 located within the communication network 115. The telephonic network interface 165 connects and communicates, via connection 145, with the network site telephonic interface 175 located within the network site 125.

As seen in Fig. 2, the communication network 115 includes the communication network server 170 and a network 180. The network 180 may be preferably a local area network, non-local area network, intranet, or the Internet. As an example, if the network 180 is the Internet, the communication network server 170 is preferably an Internet service provider (ISP).

The network telephonic interface 175 is located on the network site 125 separated by network server 120. The network telephonic interface 175 is connected and communicates, via connection 145, with the telephonic network interface 165 at the telephonic switch 110. The network telephonic interface 175 is preferably a modem The connection 145 preferably includes telephone system which consists of numerous computer networks and switching equipment for establishing a private circuit, on either a private or public network, having a plurality of switched based connections

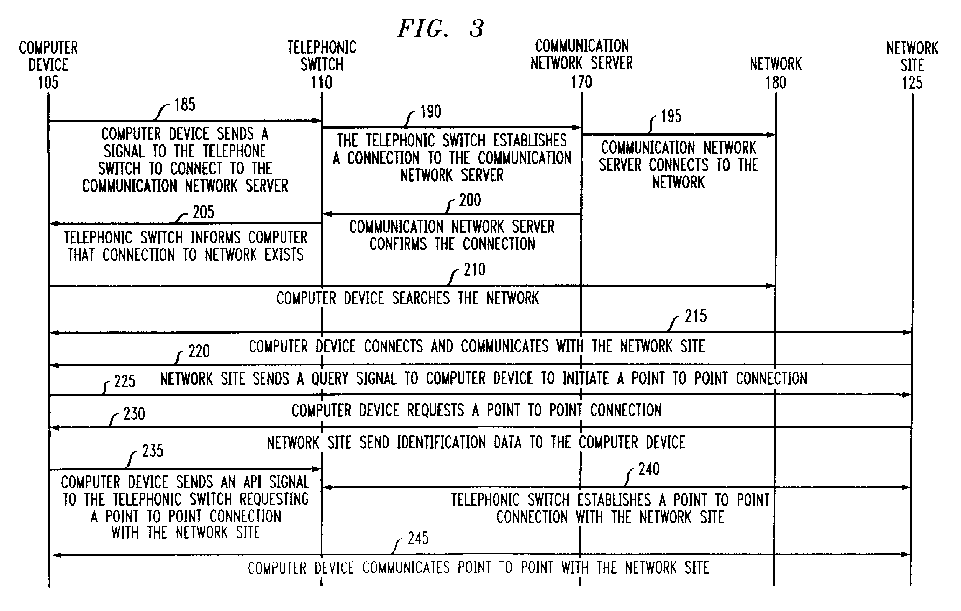

Fig. 3 is a signal flow diagram showing the method of transmitting communication signals performed at the communication system 100 of Fig. 2. The following examples are illustrative of the operation of the communication system 100 in a electronic commerce application and two way voice or tone communication. For exemplary purposes, computer device 105 is described as a personal computer (PC), the computer interface circuit 150 is a standard computer modem, the telephonic switch I 10 is a standard telephonic switch such as the SESS digital switch from Lucent Technologies, Inc., the communication network server 170 is an ISP, the network 180 is the worldwide Internet, the network server 120 is a computer system connected to the Internet, the network site 125 is a web page, the network site telephonic interface 175 is a standard modem and the connection 145 is a standard telephonic network.

As seen in Fig. 3, in step 185, the computer device 105 sends a signal to the telephonic switch 110 that instructs the telephonic switch 110 to establish a connection with the communication network server 170. In step 190, the telephonic switch 110 sends a connection signal to the communication network server 170 to establish a connection with the network 180. The communication network server 170, in step 195, establishes a connection with the network 180. In step 200, the communication network server 170 responds by sending a reply signal that the connection with the network 180 is established. In step 205, the telephonic switch 110 informs the computer device 105 that a connection to the network 180 exists.

In step 210, the computer device 105 communicates with the network 180 and finds the network site 125. In step 215, the computer device 105 communicates with the network site 125. In step 220, the network site 125 sends a query signal to the computer device 105 which queries whether to initiate a point to point signal connection 145 between the network site 125 and the computer device 105. In step 225, the computer device 105 responds to the query signal by requesting a point to point connection with the network site 125 by sending a response signal to the network site 125. In response to the response signal from the computer device 105, the network site 125, in step 230. sends a data signal containing telephone identification data for the network site 125 to the computer device 105. The computer device 105, in step 235, then sends a control signal, via such interfaces as an application programming interface (API) or by using the telephony off hook flash followed by ∗signalling (e.g. ∗90) and the destination number. , to the telephonic switch 110 requesting a point to point connection with the network site 125. In step 240, the telephonic switch 110 establishes a point to point connection with the network site 125. Then, in step 245, the computer device 105 and network site 125 communicate point to point. The point to point connection is a private circuit or switched-based connection that is routed from one site to another site across either "private facilities" which does not appear on shared public facilities or public networks.

Illustrative of one form of the invention is a method for transmitting communication signals from the telephonic switch 110, via the communication network 115, to the network server 120 having the network site 125 for communication with the computer device 105 coupled with the telephonic switch 110. The steps of connecting the telephonic switch 110 to the network site 125 via the communication network 115. and establishing communication across the point to point path (signaling path 145) between the telephonic switch 110 and the network site 125 are performed.

The step of establishing the point to point path 145 further includes the steps of creating, at the network site 125. the data signal containing the telephone identification number for the network site 125, and establishing a telephonic call from the telephonic switch 110 to the network site 125 using the data signal. The step of creating the data signal further includes the steps of creating a query signal at the network site 125, transmitting the query signal from the network site 125 to the computer device 105, creating a response signal at the computer device 105, and transmitting the response signal from the computer device 105 to the network site 125. The step of establishing the telephonic call further includes the steps of transmitting the data signal from the network site 125 to the computer device 105, transmitting a control signal, containing the telephone identification number of the network site 125, from the computer device 105 to the telephonic switch 110 and connecting the telephonic switch 110 to the network site 125 using the control signal.

While communicating point to point, the computer device 105 and network site 125 may exchange secure information such as financial account data, credit card data. personal data, or voice two way communication. In the example of two way communication, the computer device 105 possess software, similar to commonly available Internet telephone programs (some of which are embodiment in web browses produced by Netscape Communication, Inc. and Microsoft, Inc.), that allow the computer device 105 to simultaneously support a telephone connection with the network site 125. The difference is that these programs only allow the computer device 105 to connect the telephone call over the Internet. The system 100 of the present invention allows the telephone connection from the computer device 105 to the network site 125 to be via connection 145, Fig. 2. As such, the computer device 105 and network site 125 are connected simultaneously through the Internet, via the communication network 115, and the telephone network via a point to point telephone connection 145.

## Claims

1. A method for transmitting communication signals from a telephonic switch, via a communication network, to a network server having a network site for communication with a computer device coupled with the telephonic switch comprising the steps of:
connecting the telephonic switch to the network site via the communication network; and
establishing a point to point path between the telephonic switch and the network site.

2. The method of claim I wherein the communication network is a shared public communication network.

3. The method of claim 1 wherein the communication network is a worldwide Internet.

4. The method of claim 1 wherein the network site is a web site.

5. The method of claim 1 wherein the network site is a file transfer protocol site.

6. The method of claim 1 wherein the point to point path is a standard telephonic communication path.

7. The method of claim 6 wherein the standard telephonic communication path is a private circuit switched dialed calling path.

8. The method of claim 1 wherein the point to point path is established in response to the establishment of a private switched based connection between the telephonic switch and the network site

9. The method of claim 8 including the step of maintaining the connection between the telephonic switch and the network site via the communication site upon establishment of the private switched based connection between the telephonic switch and the network site.

10. The method of claim 9 in which the communication network is a shared publically accessible communication network.

11. The method of claim 10 wherein the shared publically accessible communication network is a worldwide Internet.

12. The method of claim 11 wherein the step of establishing a point to point path includes the step of establishing a plurality of private switched based connections between the telephonic switch and the network site which avoid appearing on shared publically accessible communication networks.

13. The method of claim 1 in which the step of establishing the point to point path further includes the steps of creating, at the network site, a data signal containing a telephone identification number for the network site, and
establishing a telephonic call from the telephonic switch to the network site using the data signal.

14. The method of claim 13 in which the step of creating the data signal further includes the steps of creating a query signal at the network site,
transmitting the query signal from the network site to the computer device.
creating a response signal at the computer device, and
transmitting the response signal from the computer device to the network site.

15. The method of claim 13 in which the step of establishing the telephonic call further includes the steps of transmitting the data signal from the network site to the computer device;
transmitting a control signal, containing telephone identification number of the network site, from the computer device to the telephonic switch, and
connecting the telephonic switch to the network site using the control signal.

16. The method of claim 15 including the step of sending the control signal via an application programming interface.

17. A communication system for transmitting communication signals from a telephonic switch to a network site on a network server comprising:
a communication network connected in signal communication between the telephonic switch and the network server; and
a point to point path connected between the telephonic switch and the network site.

18. The system of claim 17 wherein the communication network is the Internet.

19. The system of claim 17 wherein the network site is a web site

20. The system of claim 17 wherein the network site is a file transfer protocol site.

21. The system of claim 17 wherein the point to point path is a standard telephonic communication path.

22. The system of claim 17 further including a network site telephonic interface which creates a query signal containing a telephone identification number for the network site and transmits the query signal to the computer device, and
a computer device interface circuit which creates a response signal in response to the query signal and transmits the response signal to network site.
